Europäisches Patentamt

European Patent Office

Office européen des brevets

(11) Veröffentlichungsnummer : **0 615 607 B1**

(12) **EUROPÄISCHE PATENTSCHRIFT**

(45) Veröffentlichungstag der Patentschrift :
24.05.95 Patentblatt 95/21

(21) Anmeldenummer : 92923049.8

(22) Anmeldetag : 03.11.92

(86) Internationale Anmeldenummer :
PCT/EP92/02522

(87) Internationale Veröffentlichungsnummer :
WO 93/11403 10.06.93 Gazette 93/14

(51) Int. Cl.⁶ : **G01B 11/02**, G01B 11/06,
G01B 11/24

(54) **OPTISCHER ABSTANDSSENSOR.**

(30) Priorität : **04.12.91 EP 91120863**

(43) Veröffentlichungstag der Anmeldung :
21.09.94 Patentblatt 94/38

(45) Bekanntmachung des Hinweises auf die
Patenterteilung :
24.05.95 Patentblatt 95/21

(84) Benannte Vertragsstaaten :
DE FR GB IT NL

(56) Entgegenhaltungen :
WO-A-88/10406
GB-A- 2 144 537
US-A- 4 798 469
IBM TECHNICAL DISCLOSURE BULLETIN, Bd.
27, Nr. 12, Mai 1985, New York, NY, US, Seiten
6850-6851: "Chromatic Focusing Technique"

(56) Entgegenhaltungen :
NEUES AUS DER TECHNIK, Nr. 2, 15. Mai 1986,
Würzburg, DE, Seiten 5-6: "Optische Höhenmessung über eine Linie"
PATENT ABSTRACTS OF JAPAN vol. 10, no.
374 (P-527)(2431) 12. Dezember 1986 & JP-
A-61169708

(73) Patentinhaber : **SIEMENS
AKTIENGESELLSCHAFT
Wittelsbacherplatz 2
D-80333 München (DE)**

(72) Erfinder : **SCHICK, Anton
Frauenhofenerstr. 4
D-84419 Schwindegg (DE)**
Erfinder : **SCHNEIDER, Richard
Egerländer Str. 5
D-82024 Taufkirchen (DE)**
Erfinder : **STOCKMANN, Michael
Enzianweg 18
D-83052 Bruckmühl (DE)**

EP 0 615 607 B1

EP 0 615 607 B1

## Beschreibung

Die Erfindung betrifft einen optischen Abstandssensor nach dem konfokalen optischen Abbildungsprinzip zur Ermittlung von Höhenwerten und zur dreidimensionalen Oberflächenvermessung. Bevorzugte Einsatzgebiete sind insbesondere die Lötstelleninspektion und die Kontrolle der Bausteinbeschaffenheit bei dicht bestückten elektronischen Flachbaugruppen, wie beispielsweise Multi-Chip-Module.

Bei der Überprüfung der Lötstellen oder Bausteine einer Flachbaugruppe wird im wesentlichen auf Leiterbahneinschnürungen, Verunreinigungen durch Partikel, Lötstellenqualität, korrekte Plazierung von Anschlußbeinchen (Pads), Kurzschlüsse usw. untersucht. Durch die zunehmende Erhöhung der Packungsdichte von Bauteilen in der Mikroelektronik wird die Prüfung von dreidimensionalen Objekten bei hoher Auflösung und hohen Prüfgeschwindigkeiten notwendig. Insbesondere sollen unbestückte und bestückte Mikroverdrahtungsplatten automatisch geprüft werden.

Bisher bekannte Einrichtungen zur Aufnahme von Höhenrasterbildern, die aus einer Vielzahl von dreidimensional vorliegenden Punkten von Objektoberflächen bestehen, beruhen im wesentlichen auf dem sog. Triangulationsverfahren. Dabei tastet ein Laserstrahl die Oberfläche des Objektes ab. Die beiden ebenen Ortskoordinaten eines bestimmten Oberflächenpunktes sind durch die relative Lage zwischen Abtaststrahl oder Beleuchtungsstrahl und der Flachbaugruppe bekannt. Die Höhenkoordinate des Oberflächenpunktes, der aktuell vermessen wird, wird von mindestens einem seitlich angeordneten Objektiv in Verbindung mit einem ortsempfindlichen Detektor erfaßt. Somit lassen sich die dreidimensionalen Ortskoordinaten einer Vielzahl von Oberflächenpunkten bestimmen. Durch den Vergleich eines aufgenommenen Oberflächenbildes mit einem idealen Oberflächenbild und unter Berücksichtigung bestimmter Fehlerkriterien, können Defekte an Flachbaugruppen automatisch erkannt werden.

Das oben erwähnte Triangulationsverfahren ist in verschiedener Hinsicht weiterentwickelt worden, weist jedoch bestimmte prinzipielle Nachteile auf:

- Es besteht die Gefahr von Sekundärlichteinflüssen, wenn der Detektor das reflektierte Licht von Oberflächenpunkten des Objektes aufnimmt, die nicht dem aktuellen Auftreffpunkt entsprechen. Dies kann bei stark glänzenden Oberflächen zu erheblichen Meßfehlern führen.
- Kleine Objekte, die sich sehr dicht neben relativ großen Objekten oder in Vertiefungen befinden, können in Folge von Abschattungen nicht in jedem Fall erfaßt werden.
- Zur Einhaltung der Scheimpflugbedingung ist meist eine nicht vergrößernde Abbildung auf den Detektor erforderlich. Dies führt bei kleinen Meßfleckgrößen zu hohen Leistungsdichten. Eine hohe Leistungsdichte auf den Detektorflächen bei lateralen Photodioden begrenzt die Abtastgeschwindigkeit nach oben hin. Der Einsatz von Photodiodenarrays erhöht die Datenrate nicht.
- Es ist bisher nicht bekannt, durch einfaches Auswechseln beispielsweise eines Objektives am Sensorsystem den Abbildungsmaßstab und damit das Auslösungsvermögen zu variieren.

Auf dem Markt erhältliche Meßsysteme nach dem Triangulationsverfahren weisen bestimmte Ausgestaltungen auf, mittels der die oben genannten Nachteile teilweise vermeidbar sind. So hat die Firma Robotic Vision Systems (536 Broadhollow Road, Melville, New York 11747, USA) zur Vermeidung von Fehlmessungen durch Sekundärreflexe anstelle von lateralen Photodioden lineare Photodiodenarrays eingesetzt. Durch entsprechende Auswerte-Software werden Fehlmessungen erkannt und eliminiert. Insgesamt reduziert sich jedoch die Datenrate des Systems so stark, daß dieses für eine vollständige Inspektion in einer Prozeßlinie nicht geeignet ist.

Um die Probleme bei der Anwendung einer lateralen Photodiode zu bewältigen, hat die Firma Matsushita Kotobuki Electric Co., Ltd. (2131 Ohara-minamikata, Kawauchi-machi, Onsen-gun, Ekimeken 791-03, Japan) ein System entwickelt, bei welchem aus acht Richtungen beobachtet wird. Eine Auswertung der Detektorsignale wird durch geeignete Algorithmen vollzogen. Die Erkennungssicherheit bei glänzenden Oberflächen steigt dadurch. Die Gesamtkonstruktion wird durch den Einsatz von ca. vier Sensorköpfen mit je acht Detektoren, die mittels einer schnell rotierenden Scheibe scannen, sehr aufwendig. Darüber hinaus kann das System nicht innerhalb von tiefen Löchern messen. Eine größere Auflösung als 40 μm wird wegen mechanischer und optischer Justierprobleme beim Schnellen Rotieren des Sensorkopfes nicht erreicht.

Die Firma Nagoya Electric Works Co., Ltd (550 Takawari, Katori, Tadocho, Kuwana-gun, Mieken 511-01, Japan) scannt mit einem Laserstrahl über eine bestückte Leiterplatte und mißt den Winkel der spiegelnden Reflexion. Durch die Auswertung der Oberflächenneigung von Lötstellen oder Bauteilen kann die absolute Höhe durch Integration bestimmt werden. Neigungen, die größer als 45° betragen, können jedoch nicht detektiert werden. Dadurch ist die Höhe von Objekten mit senkrechten Wänden nicht meßbar. Eine Vermessung innerhalb von kleinen Löchern ist nicht möglich und Sekundärreflexe können nicht ausgeschaltet werden.

Ein ebenfalls bekanntes System wird von der Firma Omron Institute of Life Science (17 Chudoji minamicho, Shimogyo-ku, Kyoto 600, Japan) angeboten. Hierbei wird aus dem spiegelnd reflektierten Licht die Hö-

2

heninformation gewonnen. Die Probe wird aus verschiedenen Richtungen mit drei verschiedenen Farben beleuchtet. Das spiegelnd reflektierte Licht wird von einer Farbkamera detektiert und die Neigung der Probenoberfläche wird berechnet. Der Leistungsumfang entspricht in etwa dem System von Nagoya.

Allgemein kann gesagt werden, daß insbesondere bei Lötstellen mit spiegelnden Oberflächen auftretende Sekundärreflexe an benachbarten Lötstellen bei großen Detektorflächen Fehlinformationen und entsprechend falsche Höhenwerte zur Folge haben. Der Einsatz von kleinen Detektorflächen ist anzustreben, da hierdurch nur die unmittelbare Umgebung des momentan abzubildenden Meßortes erfaßt wird. Durch den Einsatz eines synchronisierten Triangulationsscanners wird dies berücksichtigt. Hierbei werden die Detektionsstrahlen mittels zweier seitlich angebrachter Umlenkvorrichtungen über das Scanobjektiv und die Strahlablenkeinheit (rotierender Polygonspiegel) auf die Detektorfläche gelenkt. Durch die synchrone Strahlablenkung von Beleuchtungs- und Meßstrahl (Detektionsstrahl) wird nur noch die Höhenbewegung des Auftreffpunktes auf den Detektor abgebildet, wodurch dieser entsprechend schmal dimensioniert werden kann und Sekundärreflexe in Scanrichtung ausgeblendet werden. Senkrecht zur Scanrichtung auftretende Störreflexe sind dadurch nicht zu beseitigen. Systembedingt ist der Auftreffpunkt des Lichtes bzw. der Meßort nur aus zwei Raumrichtungen zu beobachten. Bei dicht bestückten Leiterplatten führt dies zu erheblichen Abschattungen.

Ein bei der dreidimensionalen Vermessung von Strukturen bereits bewährtes Verfahren basiert auf dem konfokalen Prinzip. Hierbei wird eine punktförmige Lichtquelle, welche gewöhnlich durch eine Lochblende definiert wird, auf die Probe bzw. das Objekt abgebildet. Das rückgestreute Licht wird wiederum auf einen nahezu punktförmigen Detektor abgebildet. Die maximale Lichtintensität trifft hierbei nur auf den Detektor (Photodetektor), wenn die Objekt- und die Detektorebene tatsächlich im Brennpunkt der jeweiligen Optik liegen (konfokal). Befindet sich das Objekt außerhalb der Brennebene, so erfolgt eine starke Aufweitung des Meßstrahles vor dem punktförmigen Detektor, wodurch die meßbare Intensität stark abnimmt.

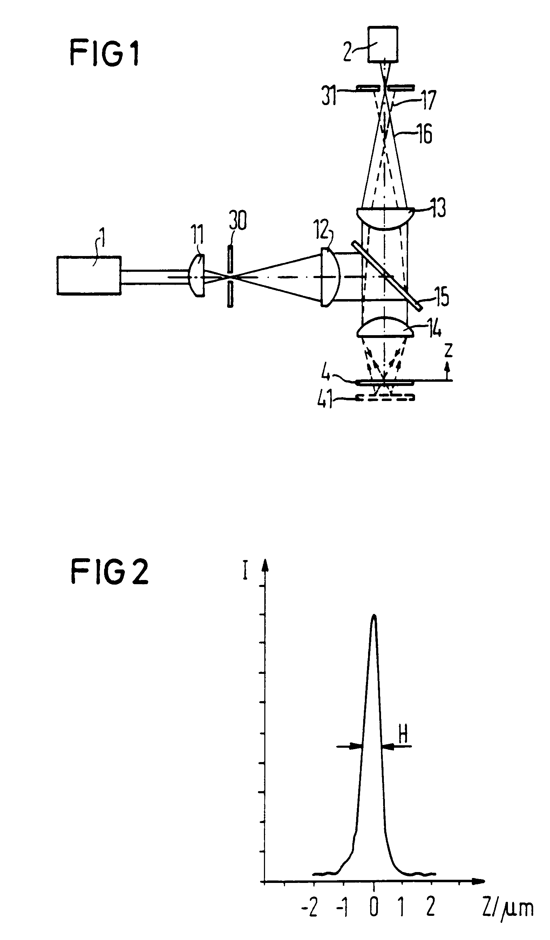

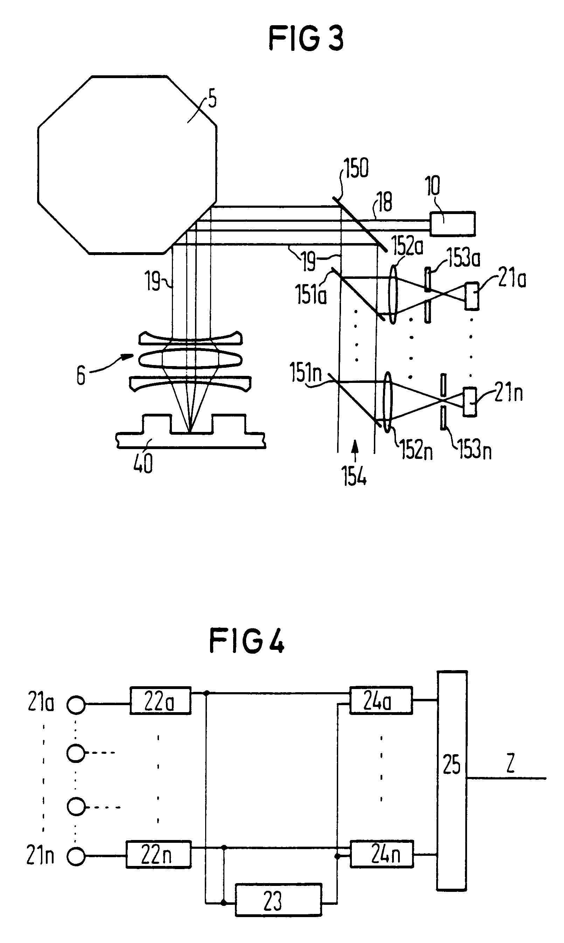

Ein auf dem konfokalen Prinzip beruhender Sensor wird beispielsweise in dem Artikel - 3-D profile detection of etched patterns using a laser scanner; Moritoshi Ando et al; Proceedings of SPIE, Vol 389, Optical Systems Engineering III; Los Angeles, California, USA; 20. - 21. Januar 1989 beschrieben. Es wird insbesondere in den Figuren 2 und 3 dargestellt, daß die Objektebene und die Sensorebene jeweils im Fokusbereich liegen. Weiterhin beschreibt dieser Artikel den Einsatz von Scan-Linsen, sowie einen rotierenden Polygonspiegel als Strahlablenkungseinheit. Gemäß dem konfokalen Prinzip sind die Achsen von Beleuchtungsstrahl und Detektionsstrahl im Bereich des Objektives identisch.

Der Erfindung liegt die Aufgabe zugrunde, einen optischen Abstandssensor mit hoher Datenrate bei gleichzeitig hoher Auflösung und geringer Empfindlichkeit in bezug auf Sekundärlichtreflexe zur Verfügung zu stellen.

Die Lösung dieser Aufgabe geschieht mittels der Lehre des Patentanspruches 1.

Ein Sensor, der auf dem konfokalen Prinzip aufbaut, arbeitet mit einer punktförmigen und auf das Objekt abgebildeten Lichtquelle. Das vom Objekt rückgestreute Licht wird seinerseits auf einen nahezu punktförmigen Detektor abgebildet. Objekt und Bild bzw. Detektor befinden sich im Fokus des Beleuchtungs- bzw. des Meßstrahles. Die damit verbundene geringe Schärfentiefe ist verbunden mit einer hohen Auflösung bei der Aufnahme von Oberflächenpunkten zur dreidimensionalen Messung von Objekten.

Die aufzunehmende Höheninformation bzw. der Höhenwert werden in Analogie zum Triangulationsverfahren durch senkrechtes Beleuchten und Beobachten unter einem möglichst großen Winkel zur Normalen auf der Objektoberfläche gewonnen. Jedoch wird beim Einsatz eines Scanobjektives, das Beleuchtungsstrahl und Meßstrahl gleichzeitig führt und wobei der Beleuchtungsstrahldurchmesser wesentlich kleiner ausbildet ist, als der Meßstrahldurchmesser, über den gesamten Öffnungskegel des Objektives betrachtet. Somit werden sämtliche vom Auftreffpunkt des Beleuchtungsstrahles auf der Objektoberfläche ausgehenden Strahlen bei der Messung berücksichtigt. Der Raumwinkel, der zur Detektion beiträgt, ist demnach wesentlich größer, als der des Triangulationsverfahrens.

Der Erfindung liegt die Erkenntnis zugrunde, daß eine für heutige Anforderungen ausreichende Datenrate mittels eines optischen Abstandssensors zu verwirklichen ist, der eine Modifizierung eines konfokalen Prinzipes darstellt. Um die relativ langsame mechanische laterale und axiale Objektverschiebung bei der Aufnahme eines gerasterten Oberflächenbildes zu umgehen, wurden mehrere parallel arbeitende nahezu punktförmige Photodetektoren entsprechend der mehrfach geteilten Meßstrahlen installiert. Die Photodetektoren sind alle konfokal angeordnet und stellen eine Unterteilung des Höhenmeßbereiches dar, der durch die Fokustiefe des Beleuchtungsstrahles vorgegeben ist, wenn das Objekt nicht in der Höhe verfahren wird. Dieser maximale Höhenmeßbereich wird somit in mehrere Stufen unterteilt, die ohne mechanisches Nachführen des Objektes auflösbar sind. Hierzu ist die bezogen auf die verschiedenen aufgeteilten Meßstrahlen versetzte Anordnung der punktförmigen Photodetektoren notwendig. Die Durchmesser der Photodetektoren sind so ausgelegt, daß die Durchmesser des Beleuchtungsstrahles innerhalb der Fokustiefe, die sich mit der Meßhöhe ändern, genau in die zugeordneten Photodetektoren abgebildet werden. Die jeweilig zutreffende Höhenstufe innerhalb der Fokustiefe des Beleuchtungsstrahles wird durch den Photodetektor mit der größten Lichtintensität erkannt.

Eine vorteilhafte Ausgestaltung der Erfindung sieht den Einsatz von Teilerspiegeln als Strahlteilungseinheit vor. Strahlteilerspiegel stellen trotz des mechanischen Aufwandes die einfachste Art einer Strahlteilungseinheit dar. Dies gilt für eine Aufteilung des Meßstrahles in bis zu ca. 20 Einzelstrahlen.

Eine konstruktive Vereinfachung wird durch den Einsatz eines einzigen lichtbeugenden Elementes erzielt. Dieses als Strahlteilungseinheit wirkende Element spaltet den Meßstrahl in eine Vielzahl von definierten Richtungen auf. Die eigentliche Detektion bleibt unverändert. Eine Besonderheit dieser Ausführungsform besteht in einer angepaßten Optik. Anstelle einer üblicherweise hinter der Strahlteilungseinheit in jedem einzelnen aufgeteilten Meßstrahl plazierten Optik ist beim Einsatz eines lichtbeugenden Elementes eine einzige Optik verwendbar. Diese wird entweder vor oder nach dem lichtbeugenden Element eingesetzt. Somit werden der gesamte Meßstrahl bzw. sämtliche aufgeteilten Meßstrahlen über diese Optik geführt. Als lichtbeugendes Element kann beispielsweise ein Beugungsgitter oder ein computergeneriertes Hologramm mit einer definierten Intensitätsverteilung eingesetzt werden.

Die punktförmige Ausbildung der Photodetektoren wird zweckmäßiger Weise durch die Kombination von Blenden und handelsüblichen Photodetektoren, beispielsweise Photodioden, erreicht. Die gesamte Einheit stellt somit den punktförmigen Photodetektor dar, der konfokal angeordnet ist, wenn die Blende im Fokusbereich des Meßstrahles liegt. Dies gilt für sämtliche Blenden bzw. Photodetektoren, die auf den Teilstrahlen plaziert sind.

Eine vorteilhafte Ausgestaltung der Erfindung verwendet ein Scanobjektiv, das für mehrere Wellenlängen derart korrigiert ist, daß bewußt eine chromatische Aberration herbeigeführt wird. Der durch die Schärfentiefe des Beleuchtungsstrahles vorgegebene Höhenscanbereich wird in diesem Fall in einzelne Stufen aufgeteilt, in dem die Schärfentiefenbereiche der einzelnen Farben sich sukzessive aneinanderreihen. Nach dem Durchgang des Lichtes durch die den punktförmigen Photodetektoren vorgeschalteten Blenden wird das Licht entsprechend den Farben aufgespalten und auf verschiedene Photodioden geführt.

Die punktförmige Lichtquelle wird in vorteilhafter Weise durch einen Laser dargestellt. Der Laser liefert den Meßstrahl, der über eine Optik scharf auf die Oberfläche eines Objektes abgebildet wird. Hierbei kann ein Laser mit monochromatischem Licht oder mit einem Licht mehrerer Wellenlängen eingesetzt werden. Letzteres ist für den Fall notwendig, daß ein für mehrere Lichtwellenlängen korrigiertes Scanobjektiv eingesetzt wird. Die hohe Leistungsdichte eines Lasers ist von wesentlichem Vorteil.

Zur Erzielung einer hohen Datenrate bei der Aufnahme eines Oberflächenrasterbildes ist eine entsprechend angepaßte Strahlablenkeinheit notwendig. Es hat sich als sehr vorteilhaft erwiesen, hierbei einen rotierenden Polygonspiegel einzusetzen, da das Zusammenspiel von mechanischem Antrieb und die Erzielung hoher Datenraten hierbei gut beherrschbar sind. In Kombination mit einem kleinen Durchmesser des Beleuchtungsstrahles am Ort des Polygonspiegels werden hohe Drehzahlen bei gleichzeitig kleiner Auslegung des Polygonspiegels ermöglicht.

Die Trennung zwischen Beleuchtungsstrahl und Meßstrahl geschieht durch einen zentrisch durchbohrten Auskoppelspiegel. Diese vorteilhafte Ausgestaltung ist auf das vorbestimmte Verhältnis zwischen den numerischen Aperturen des Meßstrahles und des Beleuchtungsstrahles ausgelegt.

Es ist von großer Bedeutung, wenn die Apertur des Meßstrahles in bezug auf die des Beleuchtungsstrahles am Meßort größer ist. Das Verhältnis zwischen Meß- und Beleuchtungsapertur ist ein Maß für die Anzahl der Höhenstufen, die im jeweiligen Höhenmeßbereich gemessen werden können. Bei nahezu isotrop streuenden Objekten ist es möglich, durch Interpolation Höhenwerte zwischen diesen Höhenstufen auszuwerten. Wird die Apertur des Meßstrahles wesentlich größer, als die des Beleuchtungsstrahles ausgelegt, so wird das Licht des Beobachtungsortes auf dem Objekt unter einem großen Winkel zu einer Flächennormalen des Objektes bzw. über einen großen Raumwinkel gesammelt. Dies verbessert die Höhenauflösung wesentlich. Ebenso ist es vorteilhaft, daß durch ein großes Verhältnis von Detektions- zu Beleuchtungsapertur ein durch Speckle verursachtes Rauschen unterddrückt wird. Das mindestens anzustrebende Verhältnis zwischen den Öffnungswinkeln von Meßstrahl und Beleuchtungsstrahl sollte 2 : 1 betragen.

Eine Vereinfachung des optischen Abstandssensors verbunden mit einer Erhöhung der Datenrate wird durch den Einsatz eines telezentrischen Scanobjektives erreicht. Hierbei wird im wesentlichen ein Rechenvorgang eingespart, der bei nicht telezentrischer Auslegung des Scanobjektives zur genauen Lageermittlung eines Bildes notwendig wäre.

Die in der Regel auftauchenden ungleichmäßigen Lichtverteilungen der Teilstrahlen auf die verschiedenen Photodetektoren werden in vorteilhafter Weise durch eine elektronische Kompensationseinheit ausgeglichen. Ungleichmäßige Verteilungen der Lichtintensität ergeben sich je nach Ausgestaltung der Strahlteilungseinheit und der Blendendurchmesser.

Die Veränderung des Höhenmeßbereiches kann in vorteilhafter Weise durch den Wechsel des Scanobjektives erreicht werden. Dies geschieht in analoger Weise wie bei einem Mikroskopobjektiv. Nachdem sich Meßbereich und Auflösung gegenseitig bedingen, muß eine diesbezügliche elektronische Abstimmung vorgenommen werden. Dadurch wird eine leichte Umrüstung einer Abtasteinrichtung ermöglicht. Durch die seitliche Neigung eines optischen Abstandssensors lassen sich mit verschiedener Bestücktechnik angefertigte Flachbaugruppen prüfen (beispielsweise "Surface Mounted Devices", "J-Leads"...).

Im folgenden werden anhand von schematischen Figuren das konfokale Prinzip und ein Ausführungsbeispiel beschrieben.

Figur 1     zeigt eine Erläuterung des konfokalen Prinzips.

Figur 2     zeigt den Verlauf der Lichtintensität während eines mechanischen Höhenscans an einem Punkt einer ebenen Objektoberfläche.

Figur 3     zeigt einen optischen Abstandssensor mit konfokalem Aufbau zum schnellen Scannen mittels eines rotierenden Polygonspiegels, wobei eine Vielzahl von parallel arbeitenden Detektoren vorhanden ist.

Figur 4     zeigt eine Prinzipskizze bezüglich der Sensorelektronik für die parallele Verarbeitung der Signale der punktförmigen Photodetektoren.

Figur 5     zeigt den Fokusbereich des Beleuchtungsstrahles bzw. die Fokustiefe.

Figur 1 zeigt eine bei der dreidimensionalen Vermessung von strukturierten Oberflächen bereits bewährte Verfahrensweise. Diese basiert auf dem konfokalen Prinzip. Beim konfokalen Prinzip wird eine punktförmige Lichtquelle, beispielsweise gebildet mittels einer Lochblende oder, wie in diesem Fall durch einen Laser 1, auf das Objekt abgebildet. Das rückgestreute Licht wird wiederum auf einen nahezu punktförmigen Detektor abgebildet. Nur für den Fall, daß die Objekt- und Detektorebene tatsächlich im Brennpunkt liegen, also konfokal sind, trifft auf den Detektor maximale Lichtintensität. Hierbei ist zu beachten, daß die punktförmige Ausbildung jedes der beiden erwähnten Bauteile durch die jeweilige Vorschaltung einer konfokalen Blende 30, 31 geschieht. Als punktförmige Lichtquelle kann demnach der Laser 1 mit der Optik 11 und der Blende 30 betrachtet werden. Der punktförmige Detektor besteht aus der Blende 31 und dem eigentlichen Detektor 2, beispielsweise einer Photodiode. Eine konfokale Konstellation wird durch den Strahlengang des fokussierten Strahles 16 dargestellt. Für diesen Fall liegt das Objekt 4 in der Brennebene bezüglich der Optik 14. Gleiches gilt für die Blenden 30, 31 bezüglich der Optik 12, 13. Befindet sich das Objekt 41 außerhalb der Brennebene, so tritt eine starke Strahlaufweitung entsprechend dem defokussierten Strahl 17 ein. Dies ist gleichbedeutend mit einem starken Intensitätsabfall am Detektor 2.

Bedingt durch das konfokale System liegt zwar eine geringe Schärfentiefe vor, die jedoch eine hohe Auflösung zur Folge hat. Die in Figur 1 dargestellte Anordnung arbeitet mit einem Teilerspiegel 15. Das Objektiv, hier die Optik 14, ist so ausgelegt, daß keinerlei Unterschiede in der Apertur des Meßstrahles im Verhältnis zu der Apertur des Beleuchtungsstrahles zu erkennen sind.

Die Figur 2 zeigt den Verlauf der Intensität I des detektierten Lichtes in Abhängigkeit von dem Höhenwert Z. Zur Aufnahme dieser Kurve wurde ein Objekt derart verschoben, daß sein Höhenwert zu beiden Seiten des Wertes verfahren wird, der der konfokalen Einstellung mit der maximalen Intensität I entspricht. Ein Auswertekriterium stellt die volle Halbwertsbreite H dar. Darunter wird der Bereich des Höhenwertes Z verstanden, der einem Abfall der Intensität I auf die Hälfte des Maximalwertes entspricht.

Die Figur 3 zeigt einen erfindungsgemäßen Aufbau, entsprechend einem modifizierten konfokalen Prinzip. Wesentlich dabei ist der mehrstufige konfokale Aufbau, der durch die Aufspaltung des Meßstrahles 19 in mehrere Einzelstrahlen mit jeweils einer Optik 152a-n, einer Blende 153a-n und einem Photodetektor 21a-n verwirklicht ist. Der Beleuchtungsstrahl 18 wird durch einen Laser 10 erzeugt und durch einen mit einer Bohrung versehenen Auskoppelspiegel 150 auf einen rotierenden Polygonspiegel 5 gelenkt. Dieser reflektiert den Beleuchtungsstrahl 18 in Richtung auf die Oberfläche des Objektes 40. Weiterhin ist ein Scanobjektiv 6 vorhanden, das Beleuchtungsstrahl 18 und Meßstrahl 19 gleichzeitig in beiden Richtungen führt. Am Meßort auf der Oberfläche des Objektes 40 ist die numerische Apertur des Beleuchtungsstrahles 18 wesentlich kleiner als die numerische Apertur des Meßstrahles 19. Der über das Scanobjektiv geführte Meßstrahl 19 wird wiederum über den rotierenden Polygonspiegel zurück auf den Auskoppelspiegel 150 geführt. Im Anschluß daran wird in einer Strahlteilungseinheit 154 der Meßstrahl 19 aufgeteilt. In der Figur 3 sind lediglich 2 Aufteilungen konkret dargestellt. In der Praxis können hier je nach Bedarf 16, 20 oder mehr Einheiten plaziert sein. Die Strahlteilungseinheit 154 kann, wie hier dargestellt, aus Teilerspiegeln 151a-n bestehen. Zur Verringerung des mechanischen Aufwandes ist jedoch auch der Einsatz eines Beugungsgitters oder der eines computergenerierten Hologrammes möglich. Der hohe Aufwand für die Herstellung eines Hologrammes kann durch die damit verbundenen wesentlichen Vorteile ausgeglichen werden. So kann die Intensitätsverteilung des gebeugten Lichtes beispielsweise durch ein entsprechend ausgelegtes Hologramm je nach Anforderung in vorbestimmter Weise beeinflußt werden. Beim Einsatz eines Beugungsgitters und auch beim Einsatz von Teilerspiegeln sorgt eine elektronische Kompensation für eine Gleichverteilung der Intensitäten der aufgeteilten Meßstrahlen 19.

Die Figur 4 zeigt eine Auswerteelektronik, die entsprechend der vorhandenen Mehrzahl von Photodetektoren 21a-n n verschiedene Lichtintensitäten verarbeitet. Jeder Detektor repräsentiert einen Höhenwert innerhalb der Fokustiefe T und die Elektronik findet den mit der höchsten Leistung heraus. Dies wird mittels einer Schwelle, deren Höhe einem bestimmten prozentualen Wert der Summe aller Intensitätswerte entspricht, erreicht. Überschreiten mehrere Signale den Schwellwert, so sind die entsprechenden Höhenwerte Z zu mitteln.

Die Auswerteelektronik nimmt von den Photodetektoren 21a-n die entsprechenden Signale über Verstärker 22a-n auf, addiert sie im Summierer 23 und vergleicht die Einzelwerte in Komparatoren 24a-n mit der Summe. Der Encoder 25 liefert den gewünschten Höhenwert Z. Um eine hohe Pixelverarbeitungsgeschwindigkeit zu erreichen, ist diese parallele Verarbeitungsweise notwendig. Als Verstärker 22a-n können beispielsweise Sample/Hold-Verstärker eingesetzt werden.

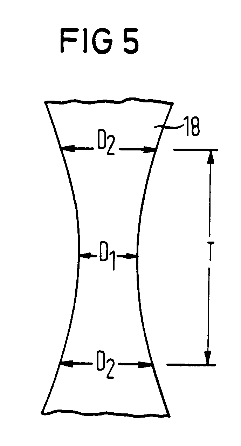

Die Figur 5 zeigt schematisch den Fokusbereich des Beleuchtungsstrahles 18. Dieser hat an seiner Taille einen Taillendurchmesser D1. Die Fokustiefe T ist so definiert, daß sie der Länge des Beleuchtungsstrahles im Fokusbereich entspricht, zwischen der jeweils in beiden Richtungen der Strahldurchmesser D2 des Beleuchtungsstrahles 18 auf das √2-fache von D1 angestiegen ist. Durch die Fokustiefe T ist der maximale Höhenscanbereich vorgegeben. Er kann jedoch durch den Wechsel des Scanobjektives 6 verändert werden. Eine andere Möglichkeit, die jedoch nicht mit der Erhöhung der Datenrate konform geht, wären die mechanische Bewegung des Objektes. Ein Sensor nach dem konfokalen Prinzip entsprechend der Figur 1 ist demnach optisch ausreichend gut, jedoch für heute notwendige Anwendungsfälle zu langsam.

Durch das konfokale Prinzip wird an sich die Störwirkung von Sekundärreflexen weitestgehend ausgeschlossen. Bisher damit realisierte Datenraten lagen jedoch bei ca. 100 - 1000 Pixeln pro Sekunde. Mit einer Anordnung entsprechend Figur 3 läßt sich die Datenrate auf über 106 Pixel pro Sekunde erhöhen. Weitere Vorteile bestehen darin, daß Abschattungen unkritisch sind, sofern ein genügend großer Raumwinkel zur Detektion zur Verfügung steht. Nachdem die Größe des Photodetektors der Größe des Beleuchtungsfleckes angepaßt ist, wird nur der beleuchtete Ort des Objektes 40 auf den Detektor, der aus dem Photodetektor 21a-n und den jeweils vorgeschalteten Blenden 153a-n besteht, abgebildet. Der in Figur 3 dargestellte Laser 10 liefert kollimiertes Licht. Die durch den geringen Durchmesser des Beleuchtungsstrahles 18 am Objekt 40 vorliegende große Fokustiefe bei der Beleuchtung wird umgesetzt in eine relativ geringe Fokustiefe bei der Abbildung. Durch die Aufteilung in einzelne Meßstrahlen 19 wird die Auflösung bzw. die Fokustiefe in kleine Schärfentiefenbereiche aufgeteilt. Bei der Dimensionierung sind die bekannten optischen Abhängigkeiten zwischen Apertur, Auflösung, Brennweite usw. zu berücksichtigen. So bedeutet die Vergrößerung der Apertur eine höhere Auflösung und die Vergrößerung der Brennweite bringt einen größeren Höhenmeßbereich entsprechend der größeren Fokustiefe mit sich. Nachdem sich jedoch Meßbereich und Auflösung gegenseitig bedingen, läßt sich beispielsweise bei einem Aperturverhältnis von Meß- und Beleuchtungsstrahl 18, 19 von 25 bei einem Höhenmeß von 0,5 mm eine Auflösung von 20 $\mu$m erreichen. Die Auflösung läßt sich durch geeignete Interpolation zwischen den Höhenstufen erhöhen. Eine Veränderung des Höhenmeßbereiches kann in einfache Weise durch den Wechsel des Scanobjektives 6 erzielt werden.

Durch einen optischen Abstandssensor entsprechend Figur 3 kann die langsame laterale Verschiebung des Objektes 40 in einer Richtungen vermieden werden. Durch den Einsatz eines zusätzlichen Galvanometerspiegels könnte die laterale Verschiebung des Objekts 40 vollständig entfallen. Die zweite laterale Abtastrichtung wird durch Scannen mittels des Beleuchtungsstrahles 18 bedient. Die Höhenwerte Z werden für jeden einzelnen Meßpunkt auf der Oberfläche des Objektes 40 über den optischen Abstandssensor ermittelt. Auf diese Weise lassen sich Pixelraten von 2 MHz realisieren. Die Datenrate bzw. Scan-Geschwindigkeit ist abhängig von der Polygonspiegelkonfiguration. Eine Ausführungsform eines optischen Abstandssensors enthält beispielsweise folgende technische Daten:

| | |
|---|---|
| Meßstrahldurchmesser: | 7,5 mm |
| Beleuchtungsstrahldurchmesser: | 0,7 mm |
| Rotationsgeschwindigkeit des Polygonspiegels (mit 12 Facetten, Nutzungsfaktor 0,5): | 15.000 Umdrehungen/Minute |
| Scanlänge (lateral): | 3,5 mm |
| laterale Auflösung: | 5 $\mu$m |
| Pixel/Scanlänge: | 700. |

Innerhalb eines Scans, d.h. innerhalb einer abgetasteten Zeile beträgt bei den obengenannten Daten die Pixeldatenrate 4,2 MHz, die von der Sensorelektronik verarbeitet werden muß. Aufgrund des Nutzungsfaktors des Polygonspiegels von 0,5 ergibt sich eine effektive Pixeldatenrate von 2,1 MHz. Bei einer mittleren Abtastgeschwindigkeit mit $2 \times 10^6$ Pixel/Sekunde ergibt sich bei sehr komplizierten Leiterplatten beispielsweise eine Prüfzeit von 20 Minuten für eine Fläche von 250x250 mm. Bei einfach strukturierten Leiterplatten liegt die Prüfzeit im Bereich von wenigen Minuten.

Die an einen optischen Abstandssensor angeschlossene Sensorelektronik entsprechend der Figur 4 beinhaltet auch die Photodetektoren 21a-n. Die hier eingesetzten Photodioden und Verstärker 22a-n sollten einen sehr großen Dynamikbereich bei kurzer Anstiegszeit aufweisen, um die durch die Oberfläche des Objektes 40 verursachten, extrem starken Intensitätsschwankungen erfassen bzw. ausgleichen zu können. Um Verstärkerübersteuerungen zu vermeiden, können deshalb Verstärker mit einer nichtlinearen Verstärkungskennlinie eingesetzt werden.

Neben der Tatsache, daß mit einem erfindungsgemäßen Abstandssensor auch spiegelnde Flächen geprüft werden können, ist zudem von Bedeutung, daß auf die Intensitätsregelung des Beleuchtungsstrahles 18 verzichtet werden kann.

## Patentansprüche

1. Optischer Abstandssensor nach dem konfokalen optischen Abbildungsprinzip zur Ermittlung von Höhenwerten und zur dreidimensionalen Oberflächenvermessung, insbesondere zur Inspektion elektronischer Flachbaugruppen , mit
   - einer punktförmigen Lichtquelle (1,10), die auf die zu vermessende Oberfläche abgebildet wird,
   - einer Strahlablenkeinheit (5) zum schrittweisen Abtasten der Oberfläche,
   - einem Scanobjektiv (6), durch das der Beleuchtungsstrahl (18) und der Meßstrahl (19) geführt werden und
   - einem zur punktförmigen Lichtquelle konfokal angeordneten Photodetektor (2),
   **gekennzeichnet durch**
   - einen Beleuchtungsstrahl (18), der im Verhältnis zum Meßstrahl (19) einen wesentlich kleineren Durchmesser in den Pupillen des Scanobjektives (6) aufweist,
   - einen annähernd gleichen Durchmesser von Beleuchtungsstrahl (18) und Meßstrahl (19) am Meßort auf der Objektoberfläche, wobei der Beleuchtungsstrahl (18) eine deutlich größere Fokustiefe (T) als der Meßstrahl (19) aufweist,
   - eine Strahlteilungseinheit (154) zur Aufspaltung des Meßstrahles (19), hinter der jeweils in Richtung der geteilten Meßstrahlen (19) eine Optik (152a-n) und ein annähernd punktförmiger Photodetektor angeordnet sind, wobei die Photodetektoren zur Unterscheidung von Höhenwerten innerhalb der Fokustiefe (T) des Beleuchtungsstrahles (18) in Richtung der geteilten Meßstrahlen (19) versetzt angeordnet sind und die jeweilige Höhenstufe durch den Photodetektor mit der größten Lichtintensität erkennbar ist,
   - Durchmesser der annähernd punktförmigen Photodetektoren, welche so ausgelegt sind, daß die sich mit der Höhe ändernden Durchmesser des Beleuchtungsstrahles (18) innerhalb der Fokustiefe (T) genau in die zugehörigen Photodetektoren abgebildet werden.

2. Optischer Abstandssensor nach Anspruch 1,
   **dadurch gekennzeichnet,**
   daß die Strahlteilungseinheit (154) durch eine Vielzahl von im Meßstrahl (19) hintereinander angeordneten Teilerspiegeln (151a-n) dargestellt ist.

3. Optischer Abstandssensor nach Anspruch 1,
   **dadurch gekennzeichnet,**
   daß zur Teilung des Meßstrahles (19) ein einziges lichtbeugendes Element vorhanden ist, das den Meßstrahl (19) in eine Vielzahl definierter Richtungen teilt, wobei die punktförmigen Photodetektoren zur Unterscheidung von Höhenwerten innerhalb der Fokustiefe (T) des Beleuchtungsstrahles (18) in Richtung der geteilten Meßstrahlen (19) versetzt angeordnet sind und die jeweilige Höhenstufe durch den Photodetektor mit der größten Lichtintensität erkennbar ist.

4. Optischer Abstandssensor nach Anspruch 3,
   **dadurch gekennzeichnet,**

daß statt der Optik (152a-n) eine einzige Optik vor oder nach dem lichtbeugenden Element angeordnet ist.

5. Optischer Abstandssensor nach einem der vorhergehenden Ansprüche,
**dadurch gekennzeichnet,**
daß die annähernd punktförmige Ausbildung der Photodetektoren (21a-n) durch den Einsatz einer vorgeschalteten Blende (153a-n) dargestellt ist.

6. Optischer Abstandssensor nach Anspruch 5, rückbezogen auf Anspruch 1 oder 2,
**dadurch gekennzeichnet,**
daß das Scanobjektiv (6) für mehrere Lichtwellenlängen derart ausgelegt ist, daß die Schärfentiefenbereiche der einzelnen Farben sich sukzessive aneinander reihen und die Intensitäten hinter den Blenden (153a-n) durch mehrere farbempfindliche Photodetektoren in Abhängigkeit von der Farbe aufnehmbar sind.

7. Optischer Abstandssensor nach einem der vorhergehenden Ansprüche,
**dadurch gekennzeichnet,**
daß die punktförmige Lichtquelle durch einen Laser (10) dargestellt ist.

8. Optischer Abstandssensor nach einem der vorhergehenden Ansprüche,
**dadurch gekennzeichnet,**
daß die Strahlablenkeinheit durch einen rotierenden Polygonspiegel (5) dargestellt ist.

9. Optischer Abstandssensor nach einem der vorhergehenden Ansprüche,
**dadurch gekennzeichnet,**
daß zur Trennung von Beleuchtungsstrahl (18) und Meßstrahl (19) ein Auskoppelspiegel (150) eingesetzt wird, der eine zentrale Bohrung aufweist.

10. Optischer Abstandssensor nach einem der vorhergehenden Ansprüche,
**dadurch gekennzeichnet,**
daß das Verhältnis zwischen den Öffnungswinkeln von Meßstrahl (19) und Beleuchtungsstrahl (18) am Meßort mindestens 2:1 beträgt.

11. Optischer Abstandssensor nach einem der vorhergehenden Ansprüche,
**dadurch gekennzeichnet,**
daß das Scanobjektiv (6) telezentrisch aufgebaut ist.

12. Optischer Abstandssensor nach einem der vorhergehenden Ansprüche,
**dadurch gekennzeichnet,** daß zur Änderung der dreidimensionalen Auflösung und des Meßbereiches das Scanobjektiv (6) in seiner Brennweite veränderbar oder gegen ein anderes austauschbar ist.

13. Optischer Abstandssensor nach einem der vorhergehenden Ansprüche,
**dadurch gekennzeichnet,**
daß eine elektronische Kompensationseinheit vorhanden ist, die ungleichmäßige Intensitätsverteilungen der Teilstrahlen des Meßstrahles (19) auf die verschiedenen Photodetektoren kompensiert.

14. Optischer Abstandssensor nach einem der vorhergehenden Ansprüche, **dadurch gekennzeichnet,** daß die elektronischen Verstärker (22a bis n) entsprechend der Photodetektoren (21a bis n) eine nichtlineare Verstärkungskennlinie aufweisen, um Übersteuerungen zu vermeiden.

15. Optischer Abstandssensor nach einem der vorhergehenden Ansprüche, **dadurch gekennzeichnet,** daß der Abstandssensor in bezug auf eine Normale zur Objektoberfläche geneigt ist, um dreidimensionale Objekte auch schräg von oben betrachten zu können.

## Claims

1. Optical distance sensor according to the confocal optical imaging principle for the determination of height values and for three-dimensional surface measurement, especially for the inspection of electronic printed circuit boards, having
- a point light source (1, 10) which is imaged onto the surface to be measured,
- a beam deflection unit (5) for the stepwise scanning of the surface,
- a scanning objective (6), through which the illumination beam (18) and the measurement beam (19) are conducted and
- a photodetector (2) disposed confocally with the point light source,

characterized by
- an illumination beam (18), which exhibits, in relation to the measurement beam (19), a substantially smaller diameter in the pupils of the scanning objective (6),
- an approximately equal diameter of illumination beam (18) and measurement beam (19) at the measurement location on the object surface, the illumination beam (18) exhibiting a distinctly greater depth of focus (T) than the measurement beam (19),
- a beam splitting unit (154) for splitting the measurement beam (19), behind which unit in each instance in the direction of the split measurement beams (19) there are disposed an optical system (152a-n) and an approximately point photodetector, the photodetectors being disposed to be offset in the direction of the split measurement beams (19) for the distinguishing of height values within the depth of focus (T) of the illumination beam (18) and the respective height level being recognizable by the photodetector with the greatest light intensity,
- diameters of the approximately point photodetectors which are designed so that the diameters of the illumination beam (18) which alter with the height are imaged within the depth of focus (T) precisely into the associated photodetectors.

2. Optical distance sensor according to Claim 1, characterized in that the beam splitting unit (154) is represented by a multiplicity of splitter mirrors (151a-n) disposed one behind the other in the measurement beam (19).

3. Optical distance sensor according to Claim 1, characterized in that for splitting the measurement beam (19) a single light-diffracting element is provided, which splits the measurement beam (19) into a multiplicity of defined directions, the point photodetectors being disposed to be offset in the direction of the split measurement beams (19) for the distinguishing of height values within the depth of focus (T) of the illumination beam (18) and the respective height level being recognizable by the photodetector with the greatest light intensity.

4. Optical distance sensor according to Claim 3, characterized in that in place of the optical system (152a-n) a single optical system is disposed ahead of or behind the light-diffracting element.

5. Optical distance sensor according to one of the preceding claims, characterized in that the approximately point design of the photodetectors (21a-n) is represented by the use of a diaphragm (153a-n) connected upstream.

6. Optical distance sensor according to Claim 5, when appended to Claim 1 or 2, characterized in that the scanning objective (6) is designed for a plurality of optical wavelengths in such a manner that the depth of field ranges of the individual colours follow one another in succession in a row and the intensities behind the diaphragms (153a-n) can be recorded by a plurality of colour-sensitive photodetectors as a function of the colour.

7. Optical distance sensor according to one of the preceding claims, characterized in that the point light source is represented by a laser (10).

8. Optical distance sensor according to one of the preceding claims, characterized in that the beam deflection unit is represented by a rotating polygonal mirror (5).

9. Optical distance sensor according to one of the preceding claims, characterized in that for the separation of illumination beam (18) and measurement beam (19) a coupling-out mirror (150) is employed, which exhibits a central bore.

10. Optical distance sensor according to one of the preceding claims, characterized in that the ratio between the aperture angles of measurement beam (19) and illumination beam (18) at the measurement location amounts to at least 2:1.

**11.** Optical distance sensor according to one of the preceding claims, characterized in that the scanning objective (6) is constructed in telecentric fashion.

**12.** Optical distance sensor according to one of the preceding claims, characterized in that for the alteration of the three-dimensional resolution and of the measurement range the scanning objective (6) can be altered in its focal length or can be exchanged for another.

**13.** Optical distance sensor according to one of the preceding claims, characterized in that an electronic compensating unit is provided, which compensates non-uniform intensity distributions of the partial beams of the measurement beam (19) onto the various photodetectors.

**14.** Optical distance sensor according to one of the preceding claims, characterized in that the electronic amplifiers (22a to n) exhibit a nonlinear gain characteristic corresponding to the photodetectors (21a to n), in order to avoid overshoots.

**15.** Optical distance sensor according to one of the preceding claims, characterized in that the distance sensor is inclined in relation to a normal to the object surface, in order to be able to view three-dimensional objects obliquely from above as well.

**Revendications**

**1.** Détecteur optique de distance opérant selon le principe de la formation d'images optiques confocales pour la détermination de valeurs de hauteur et pour la mesure tridimensionnelle de surfaces, notamment pour l'inspection de modules électroniques plats, comportant
- une source de lumière ponctuelle (1.10), dont l'image est formée sur la surface à mesurer,
- une unité (5) de déviation du faisceau pour réaliser le balayage pas-à-pas de la surface,
- un objectif de balayage (6), qui guide le faisceau d'éclairement (18) et le faisceau de mesure (19), et
- un photodétecteur (2) disposé d'une manière confocale par rapport à la source de lumière ponctuelle, caractérisé par
- un faisceau d'éclairement (18), qui, par rapport au faisceau de mesure (19), possède un diamètre nettement plus faible dans les pupilles de l'objectif de balayage (6),
- des diamètres approximativement identiques pour le faisceau d'éclairement (18) et le faisceau de mesure (19) à l'emplacement de mesure sur la surface de l'objet, le faisceau d'éclairement (18) possédant une profondeur de focalisation (T) nettement supérieure à celle du faisceau de mesure (19),
- une unité de division de faisceau (154) servant à diviser le faisceau de mesure (19) et en arrière de laquelle sont disposés, respectivement dans la direction des faisceaux de mesure divisés (19), un système optique (152a-n) et un photodétecteur de forme approximativement ponctuelle, les photodétecteurs étant disposés de façon décalée dans la direction des faisceaux de mesure divisés (19), pour établir une distinction entre des valeurs de hauteur dans les limites de la profondeur de foyer (T) du faisceau d'éclairement (18), et l'échelon respectif de hauteur pouvant être identifié par le photodétecteur possédant l'intensité lumineuse maximale,
- l'image des diamètres des photodétecteurs de forme approximativement ponctuelle, qui sont agencés de telle sorte que l'image des diamètres, qui varient avec la hauteur, du faisceau d'éclairement (18) est formée, dans les limites de la profondeur du foyer (T), de façon précise sur les photodétecteurs associés.

**2.** Détecteur optique de distance suivant la revendication 1, caractérisé par le fait que l'unité de division de faisceau (154) est formée par une multiplicité de miroirs diviseurs (151a-n), qui sont disposés les uns derrière les autres dans le faisceau de mesure (19).

**3.** Détecteur optique de distance suivant la revendication 1, caractérisé par le fait que pour la division du faisceau de mesure (19) il est prévu un seul élément de diffraction de la lumière, qui divise le faisceau de mesure (19) en une multiplicité de directions définies, les photodétecteurs de forme ponctuelle étant disposés de manière décalée dans la direction des faisceaux de mesure divisés (19) pour distinguer des valeurs de hauteur dans les limites de la profondeur de foyer (T) du faisceau d'éclairement (18) et l'échelon respectif de hauteur pouvant être identifié par le photodétecteur présentant l'intensité lumineuse maximale.

4.  Détecteur optique de distance suivant la revendication 3, caractérisé par le fait qu'un seul système optique est disposé en avant ou en arrière de l'élément de diffraction de la lumière, à la place du système optique (152a-n).

5.  Détecteur optique de distance suivant l'une des revendications précédentes, caractérisé par le fait que l'agencement de forme approximativement ponctuelle des photodétecteurs (21a-n) est obtenu grâce à l'utilisation d'un diaphragme (153a-n) disposé en avant des photodétecteurs.

6.  Détecteur optique de distance suivant la revendication 5, prise en référence à la revendication 1 ou 2, caractérisé par le fait que l'objectif de balayage (6) est conçu pour plusieurs longueurs d'onde lumineuses de telle sorte que les zones de profondeur de champ de différentes couleurs se succèdent en série et que les intensités en arrière du diaphragme (153a-n) peuvent être enregistrées par plusieurs photodétecteurs sensibles aux couleurs, en fonction de la couleur.

7.  Détecteur optique de distance suivant l'une des revendications précédentes, caractérisé par le fait que la source de lumière ponctuelle est constituée par un laser (10).

8.  Détecteur optique de distance suivant l'une des revendications précédentes, caractérisé par le fait que l'unité de déviation du faisceau est formée par un miroir polygonal rotatif (5).

9.  Détecteur optique de distance suivant l'une des revendications précédentes, caractérisé par le fait que pour la séparation du faisceau d'éclairement (18) et du faisceau de mesure, on utilise un miroir de découplage (150), qui possède un perçage central.

10. Détecteur optique de distance suivant l'une des revendications précédentes, caractérisé par le fait que le rapport entre les angles d'ouverture du faisceau de mesure (19) et du faisceau d'éclairement (18) à l'emplacement de mesure est égal à au moins 2:1.

11. Détecteur optique de distance suivant l'une des revendications précédentes, caractérisé par le fait que l'objectif de balayage (6) possède un agencement télécentrique.

12. Détecteur optique de distance suivant l'une des revendications précédentes, caractérisé par le fait que pour modifier la résolution tridimensionnelle et la gamme de mesure, on peut modifier la distance focale de l'objectif de balayage (6) ou remplacer ce dernier par un autre.

13. Détecteur optique de distance suivant l'une des revendications précédentes, caractérisé par le fait qu'il est prévu une unité de compensation électronique, qui compense des distributions non uniformes d'intensité des faisceaux partiels du faisceau de mesure (19) sur les différents photodétecteurs.

14. Détecteur optique de distance suivant l'une des revendications précédentes, caractérisé par le fait que les amplificateurs électroniques (22a à n) possèdent, en fonction des photodétecteurs (21a à n), une courbe d'amplification caractéristique non linéaire, afin d'éviter des surmodulations.

15. Détecteur optique de distance suivant l'une des revendications précédentes, caractérisé par le fait que le détecteur de distance est incliné par rapport à la normale à la surface de l'objet de manière à permettre l'observation d'objets tridmensionnels, obliquement à partir du haut.

FIG 1

FIG 2

# FIG 3

# FIG 4

FIG 5